**Europäisches Patentamt**

**European Patent Office**

**Office européen des brevets**

(11) Veröffentlichungsnummer: **0 275 056**

**A2**

# EUROPÄISCHE PATENTANMELDUNG

(21) Anmeldenummer: **88100214.1**

(22) Anmeldetag: **09.01.88**

(51) Int. Cl.⁴: **B64C 3/48** , B64C 27/46

(30) Priorität: **12.01.87 DE 3700632**

(43) Veröffentlichungstag der Anmeldung:
**20.07.88 Patentblatt 88/29**

(84) Benannte Vertragsstaaten:
**DE FR GB IT**

(71) Anmelder: **Deutsche Forschungs- und Versuchsanstalt für Luft- und Raumfahrt e.V. Linder Höhe Postfach 90 60 58 D-5000 Köln 90(DE)**

(72) Erfinder: **Junker, Bernd Siekbruch 62a D-3300 Braunschweig(DE)**

(74) Vertreter: **Gralfs, Harro, Dipl.-Ing. Am Bürgerpark 8 D-3300 Braunschweig(DE)**

(54) **Vorrichtung zum Verstellen von Klappen an Tragflächenprofilen.**

(57) Vorrichtung zum Verstellen von im wesentlichen plattenförmigen Klappen an Tragflächenprofilen. Die Klappe (8;24) ist mit einer Längsseite starr mit dem Tragflächenprofil verbunden. Es ist wenigstens auf einer Seite der Klappe (8;24) ein an eine Hydraulikleitung (18;30,32) angeschlossener, in einer Richtung dehnbarer Balgen (12;26,28;40,42) vorgesehen, dessen Dehnungsrichtung quer zu einer vorgesehenen Biegeachse (10) der Klappe liegt. Der Balgen ist mit seinen Wulsten fest mit der Oberfläche der Klappe verbunden.

EP 0 275 056 A2

# VORRICHTUNG ZUM VERSTELLEN VON KLAPPEN AN TRAGFLÄCHENPROFILEN

Die Erfindung bezieht sich auf eine Vorrichtung zum Verstellen von im wesentlichen plattenförmigen Klappen an Tragflächenprofilen.

Es ist bekannt, im wesentlichen plattenförmige Klappen als Verstellklappen an den Rotorblättern von Hubschraubern anzuordnen, mit denen eine Veränderung des Profilauftriebs möglich ist. Derartige Klappen sind beispielsweise an den Rotorblättern des KAMAN-Hubschraubers vom Typ SH-2F bekannt. Diese Klappen werden hierbei über ein mechanisches Gestänge betätigt. Dies hat den Nachteil, daß im Rotorblatt ein erheblicher Aufwand für die Stangenführung und deren Lagerung erforderlich ist. Nachteilig ist weiter die Massenträgheit der sich bewegenden Teile und die Massenanhäufung durch die Bauteile im Rotorblatt. Derartige Gestänge sind zudem wartungsintensiv.

Bei in die Tragflächen eines Flugzeuges integrierten Klappen ist es bekannt (US-A-2 152 029), den Klappenabschnitt aus einer Vielzahl von quer zur Biegeachse verlaufenden Bauelementen zusammenzusetzen, die jeweils untereinander beispielsweise über Blattfedern miteinander verbunden sein können. Zur Betätigung sind mechanische Stößel vorgesehen, die im Abstand oberhalb der gelenkigen Verbindung der Bauelemente angeordnet sind und die jeweils unterschiedliche wirksame Längen haben, so daß durch axiale Krafteinleitung in ein Endelement die gewünschte Krümmung erzielbar ist. Eine solche Anordnung ist aufwendig und hat einen erheblichen Platzbedarf. Für plattenförmige Klappen, die beispielsweise aus einem Blech bestehen, ist eine solche Anordnung nicht geeignet.

Bei einer ähnlichen Anordnung (US-A-4 247 066) ist ein Getriebe vorgesehen, das über Schraubspindeln verstellbar ist. Auch diese Anordnung ist konstruktiv aufwendig. Eine weitere mechanisch betätigte Vorrichtung zur Änderung eines Klappenprofils ist in der DE-A-27 13 902 beschrieben.

Aufgabe der Erfindung ist es, eine Vorrichtung zum Verstellen von plattenförmigen Klappen an Tragflächenprofilen, insbesondere Rotorblättern für Hubschrauber, zu schaffen, die einfach im Aufbau ist, eine geringe Massenträgheit hat und nur geringer Wartung bedarf.

Diese Aufgabe wird gelöst durch die im kennzeichnenden Teil des Patentanspruches 1 herausgestellten Merkmale.

Zweckmäßige Ausgestaltungen sind Gegenstand der abhängigen Ansprüche.

Die Erfindung ist in der Zeichnung in Ausführungsbeispielen veranschaulicht und im nachstehenden im einzelnen anhand der Zeichnung beschrieben.

Fig. 1 zeigt schematisch eine Draufsicht auf ein Rotorblatt für einen Hubschrauber, das mit einer plattenförmigen Klappe mit einem Stellantrieb gemäß der Erfindung versehen ist.

Fig. 2 zeigt einen Schnitt längs der Linie II-II in Fig. 1.

Fig. 3 zeigt in einem größeren Maßstab einen Querschnitt durch eine plattenförmige Klappe mit doppelseitigem Stellantrieb.

Fig. 4 zeigt die Klappe nach Fig. 3 in einer Ausschlagslage.

Fig. 5 zeigt in einem Querschnitt eine weitere Ausführungsform einer Klappe mit einem doppelseitigen Stellantrieb.

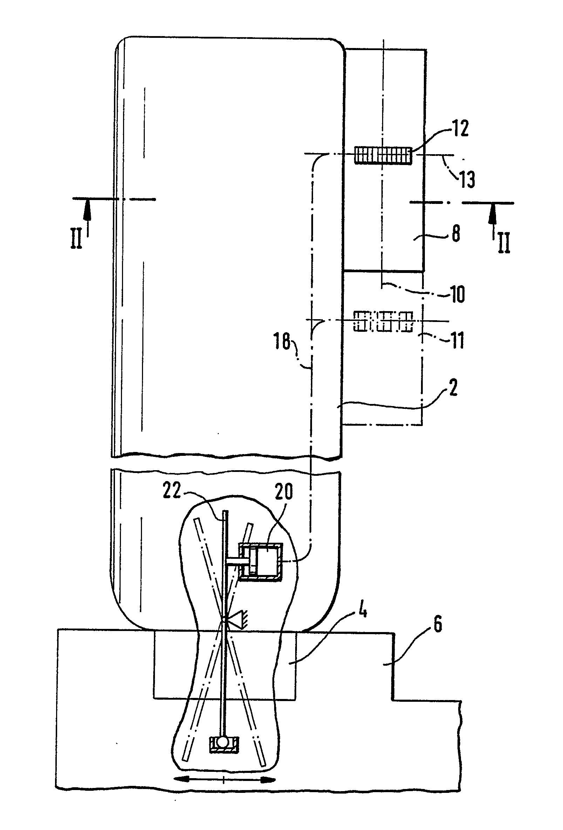

In Fig. 1 ist in Draufsicht ein Rotorblatt 2 dargestellt, das an seinem innen liegenden Ende mit einer drehbaren Befestigung 4 versehen ist, mit der es am Rotorkopf 6 befestigt ist. An der Rückseite des Rotorblattes 2 ist eine plattenförmige Klappe 8 angeordnet. Diese Klappe kann ein einfaches Blech sein, das an einer Längsseite fest mit der Rückseite des Rotorblattprofils verbunden ist. Klappenausschläge werden durch Biegen der Platte um eine zur Rotorblattachse vorzugsweise parallele Biegeachse 10 durchgeführt. Ein Klappenausschlag durch ein derartiges Verbiegen der Klappe 8 wird durch einen Antrieb erzeugt, der einen Balgen 12 aufweist, der sich mit seiner Achse 13 quer zur Biegeachse 10 der Klappe 8 erstreckt. Dieser Balgen liegt auf der Oberseite der Klappe auf und ist an seinen beiden Enden 14 und 16 fest mit der Platte verbunden. Um Ausknickungen des Balgens zu verhindern, ist wenigstens in der Mitte eine weitere Befestigung vorgesehen. Vorzugsweise sind alle Wulste des Balgens an ihren Berührungspunkten mit der Klappe mit dieser fest verbunden, insbesondere verlötet.

An den Balgen ist an dem dem Rotorblattprofil zugewandten Ende 14 eine Hydraulikleitung 18 angeschlossen, die, wie in Fig. 1 dargestellt, innerhalb des Rotorblattes 2 geführt ist und an ihrem innen liegenden Ende an einen Stellzylinder 20 angeschlossen ist. Dieser Verstellkolben wird von einem angepaßten Aktuator von der Rotorkopfmitte her in bekannter Weise angetrieben. Das Hydrauliksystem aus dem Balgen 12, der Leitung 18 und dem Stellzylinder 20 ist ein hydraulisches Gestänge mit einem abgeschlossenen Ölkreis lauf. Das Gestänge muß gegen Leckverluste dicht sein. Es kann auch geschlossen sein, wobei an beiden Enden der Leitung Balgen vorgesehen sind. Die Balgen an dem Ende der Leitung, das dem mit der Klappe verbundenen Ende abgewandt ist, können dabei über eine Mechanik in Achsrichtung zusammendrückbar sein und dabei die Funktion eines Stellzylinders übernehmen.

Bei Betätigung des Stellkolbens im Stellzylinder 20 mittels des Aktuators 22 wird Drucköl in den Balgen 12 gefördert. Der Balgen 12 dehnt sich dabei in Achsrichtung aus. Da der Balgen jedoch fest mit der Klappenoberfläche verbunden ist, kommt es zu einem Verbiegen der Klappe quer zur Achse des Balgens und damit zu einer Stellbewegung der Klappe. Diese Stellbewegung findet im Elastizitätsbereich des Werkstoffes statt, aus dem die Klappe besteht. Bei Rückstellung des Aktuators 22 wird damit über die Rückstellkräfte innerhalb der Klappe die Klappe wieder gestreckt und dabei Öl in dem Maße aus dem Balgen 12 in den Stellzylinder zurückgefördert, indem dies durch den Aktuator zugelassen wird.

Für die Betätigung einer Klappe an einem Rotorblatt für einen Hubschrauberrotor läßt sich die Klappenverstellung beispielsweise mit einem Balgendurchmesser von 5 bis 6 mm und einer Balgenlänge von etwa 30 mm erzielen. Für die Leitungen können Leitungen mit Innendurchmessern von 2 mm Verwendung finden. Die Hydraulikleitung 18 innerhalb des Rotorblattes bedarf keiner besonderen Führungen. Sie muß lediglich gegen Fliehkräfte gesichert werden.

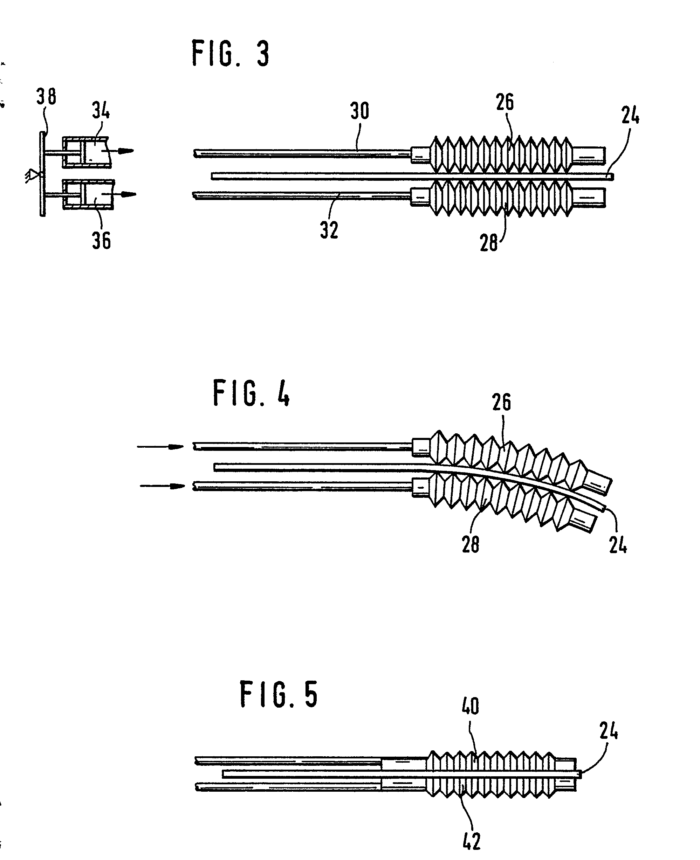

Statt einer einseitigen Anordnung eines Balgens, wie sie in Fig. 1 und 2 vorgesehen ist, kann auch eine doppelseitige Anordnung vorgesehen werden, wie sie in den Fig. 3 bis 5 dargestellt ist. Diese beiden Balgen 26, 28 liegen dabei jeweils parallel zueinander spiegelbildlich auf den beiden Oberseiten der Klappe 24, wobei beide Balgen vorzugsweise gleiche Länge haben. Jeder der Balgen ist an eine gesonderte Leitung 30, 32 angeschlossen, die jeweils mit einem gesonderten Stellzylinder 34, 36 verbunden sind. Diese Stellzylinder sind mit einer Stellmechanik 38 versehen, mit der die beiden Stellzylinder 34 und 36 jeweils gegenläufig betätigt werden. Auf diese Weise wird bei Ölverdrängung aus dem Stellzylinder 34 in den Balgen 26 dieser Balgen gelängt. Bei der Längung, die mit einer Krümmung der Klappe verbunden ist, wird die Länge des Balgens 28 auf der gegenüberliegenden Seite verkürzt und dabei Öl in dessen Stellzylinder 36 verdrängt. Fig. 4 zeigt die Klappe in einer Auschlagsstellung mit gestrecktem oberen Balgen 26 und verkürztem unteren Balgen 28. Durch eine solche zweiseitige Anordnung der Balgen 26 und 28 wird der Einfluß von auf die Klappe wirkenden aerodynamischen Kräften auf den Stellantrieb eliminiert. Mit einem derarigen Antrieb lassen sich auch Klappen betätigen, die in sich keine hinreichenden elastischen Rückstellkräfte entwickeln.

Bei der Ausführungsform nach Fig. 5, bei der wieder beidseitig der Klappe 24 Balgen als Stellantrieb vorgesehen sind, ist eine Verringerung der Bauhöhe der Balgen dadurch erreicht, daß die Balgen in ihrer Achsebene durchgetrennt sind. Die Balgen haben damit einen halbkreisförmigen Querschnitt. Diese Halbbalgen liegen mit ihrer offenen Seite auf der Klappe 24 auf und sind abdichtend mit der mit der Klappe durch Schweißung oder Lötung verbunden. Die Stellwirkung der beiden Balgen 40 und 42 ist hierbei die gleiche wie bei der Ausführungsform nach den Fig. 3 und 4.

Klappensteuerungen mit Balgen der beschriebenen Art haben den Vorteil einer kleinen Masse und eine kleinen Massenträgheit, da für eine Stellbewegung nur eine geringe Ölmenge in die Leitung 30 und über die Leitung in die Balgen gefördert werden muß. Ein Vorteil ist weiter, daß Gelenke zwischen der Klappe und dem Rotorblattprofil vermieden werden. Die Klappen können damit fugenlos an das Rotorblattprofil angeschlossen werden. Wie anhand Fig. 5 dargestellt, lassen sich die durch die Balgen gebildeten strömungsbeeinflussenden Aufbauten auf den Klappen klein halten. Die Balgen liegen dabei strömungsgünstig in Strömungsrichtung der Luft über die Klappe. Die Anschlußleitungen für die Balgen können an den Profilenden des Rotorblattes direkt in das Rotorblatt eingeführt werden.

In Abhängigkeit von der radialen Länge der Klappen kann es notwendig sein, in Abständen mehrere Balgen parallel zueinander anzuordnen. In Fig. 1 ist ein zusätzlicher Balgen 11 gestrichelt dargestellt, der zu dem Balgen 12 parallel liegt und von diesem einen Abstand 1 hat. Die Anordnung weiterer Balgen oder Balgenpaare is möglich. Alle auf der gleichen Klappenfläche angeordneten Balgen sind dabei vorzugsweise im Bereich der Klappe an eine einzige Anschlußleitung 18 angeschlossen.

Ein weiterer Vorteil der erfindungsgemäß ausgebildeten plattenförmigen Klappen besteht darin, daß die Klappen beim Anstellen in sich gekrümmt sind, wodurch ein günstigerer Strömungsverlauf entlang den Klappen erreichbar ist als bei den bekannten Klappen, die an der Rückseite der Rotorblätter angelenkt sind. Bei dieser bekannten Anordnung werden lediglich die eben ausgebildeten Klappen geschwenkt.

## Ansprüche

1. Vorrichtung zum Verstellen von im wesentlichen plattenförmigen Klappen an Tragflächenprofilen, dadurch gekennzeichnet, daß die Klappe (8;24) mit einer Längsseite starr mit dem Tragflächenprofil verbunden ist und daß wenigstens auf einer Seite der Klappe (8;24) ein an eine Hydraulikleitung (18;30;32) angeschlossener, in einer Richtung dehnbarer Balgen (12;26,28;40,42) vorgesehen ist, dessen Dehnungsrichtung quer zu einer vorgesehenen Biegeachse (10) der Klappe liegt und der mit seinen Wulsten fest mit der Oberfläche der Klappe verbunden ist.

2. Vorrichtung nach Anspruch 1, dadurch gekennzeichnet, daß der Balgen (12;26,28;40,42) Teil eines geschlossenen hydraulischen Gestänges ist, das am anderen Ende der Hydraulikleitung eine Stellvorrichtung (20;34,36) aufweist.

3. Vorrichtung nach Anspruch 1 oder 2, dadruch gekennzeichnet, daß auf beiden Seiten der Klappe (24) jeweils ein Balgen (26,28;40,42) vorgesehen ist, daß die beiden Balgen spiegelbildlich übereinander angeordnet sind und daß an den Enden der Hydraulikleitungen (30,32) jeweils Stellvorrichtungen (34,36) vorgesehen sind, die über eine Mechanik (38) gegenläufig betätigbar sind.

4. Vorrichtung nach einem der vorhergehenden Ansprüche, dadurch gekennzeichnet, daß als Balgen in Achsrichtung geteilte Halbbalgen (40,42) vorgesehen sind, die in der Teilungsebene mit der Oberfläche der Klappe (24) durch Lötung oder Schweißung abdichtend verbunden sind.

5. Vorrichtung nach einem der vorhergehenden Ansprüche, dadurch gekennzeichnet, daß das Tragflächenprofil ein Rotorblatt für einen Hubschrauber ist und daß die Klappe im außen liegenden Abschnitt des Rotorblattes angeordnet ist.

6. Vorrichtung nach einem der vorhergehenden Ansprüche, dadurch gekennzeichnet, daß in Abständen eine Mehrzahl von parallel angeordneten Faltenbalgen vorgesehen ist und daß alle auf einer Klappenoberfläche liegenden Faltenbalgen an ein und dieselbe Anschlußleitung angeschlossen sind.

# FIG. 3

# FIG. 4

# FIG. 5